# FASCICULE DE BREVET EUROPEEN

(11) **EP 4 018 106 B1**
(45) Date de publication et mention de la délivrance du brevet: **26.04.2023**
(21) Numéro de dépôt: 20772364.4
(22) Date de dépôt: 17.08.2020
(51) Int. Cl.: F16C 33/66, F16C 37/00, F16C 35/073, F01D 25/12, F01D 25/16, F01D 25/18, F16C 33/58

(54) **DISPOSITIF DE DISTRIBUTION D'HUILE D'UN PALIER A ROULEMENT DE TURBOMACHINE D'AERONEF**
VORRICHTUNG ZUM VERTEILEN VON ÖL AUS EINEM WÄLZLAGER FÜR EIN FLUGZEUGTRIEBWERK
DEVICE FOR DISTRIBUTING OIL FROM A ROLLING BEARING FOR AN AIRCRAFT TURBINE ENGINE

(30) Priorité: 19.08.2019 FR 1909267
(43) Date de publication de la demande: 29.06.2022
(73) Titulaire: SAFRAN AIRCRAFT ENGINES, 75015 Paris (FR)
(72) Inventeur: PERDRIGEON, Christophe, Marcel, Lucien, 77550 MOISSY-CRAMAYEL (FR); SERVANT, Régis, Eugène, Henri, 77550 MOISSY-CRAMAYEL (FR); BAZIN, Guillaume, François, Jean, 77550 MOISSY-CRAMAYEL (FR)
(74) Mandataire: Gevers & Orès
(86) Numéro de dépôt international: PCT/FR2020/051470
(87) Numéro de publication internationale: WO 2021/032924

(56) Documents cités:
- FR-A1- 2 951 227
- FR-A1- 3 066 549
- US-A1- 2018 142 733
- US-B1- 6 409 464

## Description

### Domaine technique de l'invention

La présente invention concerne un dispositif de distribution d'huile d'un palier à roulement pour une turbomachine d'aéronef.

### Aval-plan technique

L'état de l'art comprend notamment les documents FR-A1-3 035 154, FR-A1-3 066 549 et WO-A1-2015/075355. FR-A1 - 3 066 549 divulgue un dispositif de distribution d'huile suivant le préambule de la revendication 1.

De façon connue, une turbomachine comprend un certain nombre de paliers à roulement qui sont destinés à supporter en rotation le rotor de la turbomachine, notamment par rapport à un support fixe tel que le carter de celle-ci.

En fonctionnement, de l'huile est typiquement injectée sur les roulements de ces paliers de façon à les lubrifier et à les refroidir. Pour éviter que de l'huile ne se répande dans tout le moteur, il est nécessaire de confiner les paliers à roulement à l'intérieur d'enceintes à huile et d'assurer une étanchéité de ces enceintes à huile par rapport à des enceintes à air voisines du moteur qui doivent être exemptes d'huile.

Plus précisément, certaines enceintes à huile sont délimitées entre l'arbre supporté en rotation par le palier à roulement et un couvercle annulaire solidaire d'un support fixe lié au carter de turbomachine et disposé autour de l'arbre. Un joint annulaire dynamique est généralement positionné entre l'arbre et le couvercle pour assurer une étanchéité entre l'enceinte à huile et une enceinte à air voisine de cette dernière. Typiquement, le joint dynamique est monté à l'intérieur d'un flasque lui-même fixé sur le couvercle.

Les joints dynamiques typiquement utilisés dans les enceintes à huile de palier à roulement pour turbomachine sont des joints radiaux segmentés (JRS), comportant une pluralité de segments d'anneau répartis circonférentiellement autour d'une piste de joint tournant avec l'arbre du rotor. Ces segments sont en contact glissant avec la piste de joint. Les frottements entre les segments du joint et la piste de joint génèrent de la chaleur qu'il est nécessaire d'évacuer afin de conserver l'intégrité mécanique de ces éléments. Pour ce faire, une technique consiste à faire circuler de l'huile de refroidissement le long de la paroi interne de la piste de joint.

Le joint dynamique peut être situé juste à côté d'un palier à roulement qui est lubrifié par de l'huile en fonctionnement. Il est connu de lubrifier un palier à roulement par l'intermédiaire d'une bague de distribution d'huile. Le palier à roulement est monté sur la bague de distribution d'huile qui comprend une écope de récupération d'huile projetée par un gicleur, afin de récolter cette huile et alimenter un circuit de lubrification du palier.

La présente invention propose un perfectionnement à cette technologie qui permet notamment d'optimiser le refroidissement de la piste d'un joint dynamique, par exemple du type JRS, disposé à côté d'un palier à roulement lubrifié.

### Résumé de l'invention

L'invention concerne un dispositif de distribution d'huile d'un palier à roulement pour une turbomachine d'aéronef, comportant :
- un palier à roulement comportant deux bagues, respectivement interne et externe,
- une bague de distribution d'huile configurée pour être montée sur un arbre de turbomachine, cette bague de distribution comportant :
   i) une première surface cylindrique externe de montage de la bague interne du palier, et
   ii) une écope de récupération d'huile alimentant un circuit de lubrification dudit palier,
- une piste annulaire d'un joint dynamique, en particulier du type JRS, caractérisé en ce que ladite bague de distribution et ladite piste sont formées par un corps d'une seule pièce, et en ce que ledit circuit de lubrification est formé dans ce corps et s'étend dans la bague de distribution et la piste.

L'invention permet d'une part de réduire le nombre de pièces et donc la conception du dispositif puisque son corps intègre plusieurs fonctions à savoir celle de la bague de distribution qui supporte et lubrifie le palier, ainsi que celle de la piste du joint dynamique. Le dispositif peut ainsi avoir un encombrement, en particulier radial et axial, réduit par rapport à la technique antérieure. L'invention permet également de simplifier le circuit d'huile qui sert à la fois à la lubrification du palier et au refroidissement de la piste de joint. En effet, la circulation d'huile à proximité de cette piste permet de la refroidir par conduction thermique, ce qui est particulièrement avantageux. Le passage d'huile depuis l'écope dans le corps et de la bague à la piste ne nécessite donc pas forcément de système d'étanchéité particulier, ce qui limite également le risque de fuite d'huile incontrôlée en fonctionnement. Par ailleurs, la réduction du diamètre de la piste entraîne la diminution de la section de fuite à étancher par le joint dynamique, ce qui améliore encore l'efficacité du dispositif d'étanchéité.

Le dispositif selon l'invention peut comprendre une ou plusieurs des caractéristiques suivantes, prises isolément les unes des autres, ou en combinaison les unes avec les autres :
- ledit corps comporte une seconde surface cylindrique externe de support du joint, et dans lequel ledit circuit comprend au moins un premier canal de forme allongée comportant une première extrémité axiale débouchant au niveau de ladite écope, et une seconde extrémité axiale opposée entourée par ladite seconde surface,
- ledit circuit comprend au moins un second canal de forme allongée comportant une troisième extrémité axiale reliée à la seconde extrémité axiale dudit au moins un premier canal, et une quatrième extrémité axiale opposée débouchant au niveau ou au voisinage de ladite première surface.
- ledit au moins un premier canal est situé sur une circonférence centrée sur un axe du palier, qui a un diamètre D1, et ledit au moins un second canal est situé sur une circonférence centrée sur cet axe, qui a un diamètre D2, avec D1 inférieur à D2 qui est lui-même inférieur au diamètre D3 de ladite seconde surface,
- les seconde et troisième extrémités sont reliées entre elles par au moins un conduit coudé, et/ou au moins un conduit en zig-zag, et/ou au moins un conduit en spiral ou hélice,
- ledit au moins un premier canal et/ou ledit au moins un second canal est/sont au moins en partie rempli(s) d'une structure alvéolaire formant treillis,
- ledit au moins un premier canal et/ou ledit au moins un second canal a/ont en section transversale une forme générale circulaire, triangulaire, rectangulaire ou trapézoïdale,
- ledit corps comprend un épaulement annulaire d'appui d'une première extrémité axiale de la bague interne, ledit corps comportant en outre un filetage de vissage d'un écrou configuré pour prendre appui sur une seconde extrémité axiale opposée de la bague interne,
- ledit au moins un second canal a sa quatrième extrémité qui débouche entre ladite première surface et ledit filetage, de préférence en regard d'au moins un troisième canal formé dans ledit écrou,
   -- ledit filetage est situé entre lesdites première et seconde surfaces,
   -- ladite écope est située à une première extrémité axiale dudit corps, et ladite piste (ou ladite seconde surface) est située à une seconde extrémité axiale opposée du corps,
   -- ledit corps comprend à une première extrémité axiale une rangée annulaire de dents de crabot, et
   -- ledit corps comprend à une seconde extrémité axiale opposée une butée d'appui.

L'invention concerne en outre une turbomachine, en particulier d'aéronef, comportant un au moins un dispositif tel que décrit ci-dessus.

La turbomachine selon l'invention peut comprendre une ou plusieurs des caractéristiques suivantes, prises isolément les unes des autres, ou en combinaison les unes avec les autres :
-- la turbomachine comprend un arbre autour duquel est monté le dispositif ainsi qu'un tourillon, le corps du dispositif étant serré axialement entre un épaulement annulaire de l'arbre et le tourillon qui est sollicité axialement en butée contre le corps par vissage d'un écrou sur l'arbre, et
-- la turbomachine comprend un gicleur d'huile dans un espace annulaire délimité par ladite écope, et en particulier entre l'écope et ledit arbre.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une demi vue schématique partielle en coupe axiale d'une turbomachine comportant un dispositif de distribution d'huile selon un mode de réalisation de l'invention,
[Fig. 2] la figure 2 est une vue schématique partielle en perspective et en coupe axiale du dispositif de la figure 1,
[Fig. 3] la figure 3 est une vue schématique partielle en perspective et en coupe axiale et transversale du dispositif de la figure 1, la coupe transversale étant réalisée selon la ligne III-III de la figure 2,
[Fig. 4] la figure 4 est une vue similaire à celle de la figure 2 et représentant une variante de réalisation du dispositif, la vue de détail représentant une partie d'un circuit d'huile de lubrification,
[Fig. 5] la figure 5 est une vue similaire à celle de la figure 2 et représentant une autre variante de réalisation du dispositif, la vue de détail représentant une partie d'un circuit d'huile de lubrification,
[Fig. 6] la figure 6 est une vue similaire à celle de la figure 2 et représentant une autre variante de réalisation du dispositif, la vue de détail représentant une partie d'un circuit d'huile de lubrification,
[Fig. 7] la figure 7 est une vue similaire à celle de la figure 2 et illustrant une autre variante de réalisation du dispositif,
[Fig. 8] la figure 8 est une vue schématique partielle en perspective et en coupe axiale et transversale du dispositif de la figure 7, la coupe transversale étant réalisée selon la ligne VII-VII de la figure 7,
[Fig. 9] la figure 9 est une vue schématique partielle en perspective et en coupe axiale et transversale d'une autre variante du dispositif, et
[Fig. 10] la figure 10 montre des exemples schématiques de structures alvéolaires en treillis.

### Description détaillée de l'invention

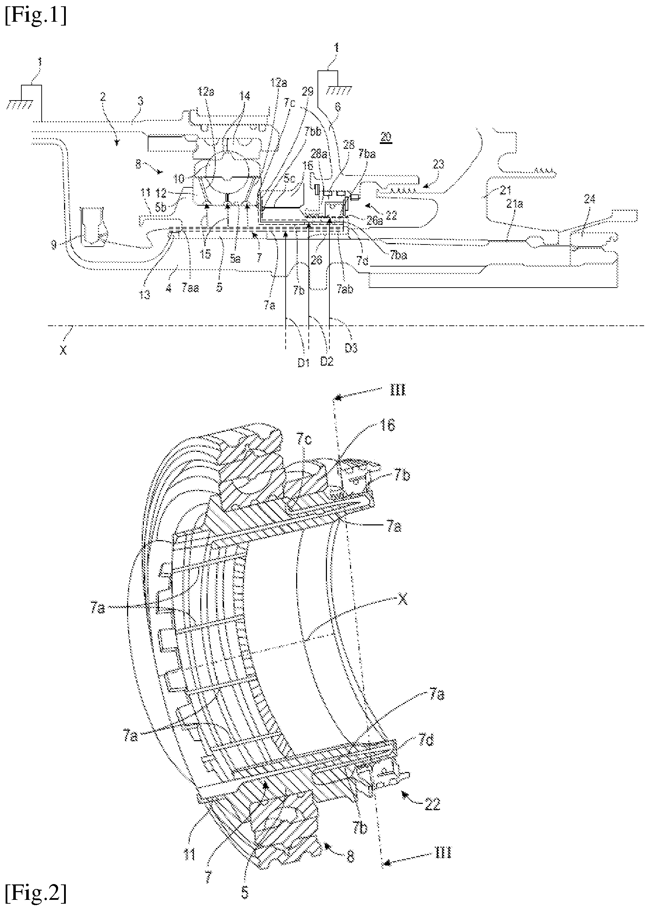

La figure 1 représente de façon schématique et partielle une enceinte à huile 2 d'un palier de turbomachine d'aéronef.

Cette enceinte à huile 2 est délimitée, du côté intérieur, par un arbre 4 tournant autour d'un axe X, et du côté extérieur par un couvercle annulaire 6 et un support de palier 3 qui sont solidaires d'un carter 1 de la turbomachine et qui est disposé autour de l'arbre 4.

Une bague 5 de distribution d'huile est disposée autour de l'arbre 4 coaxialement à celui-ci, et est solidaire en rotation de celui-ci.

L'enceinte à huile 2 renferme un palier 8 comprenant une pluralité d'éléments roulants 10 engagés entre une bague interne 12 montée sur la bague de distribution 5, de préférence par frettage, et une bague externe 14 solidaire du support de palier 3 fixé au carter 1 de la turbomachine. Le support de palier 3 peut avoir une certaine souplesse.

Dans l'exemple illustré sur les figures, les éléments roulants 10 sont des billes. Néanmoins, le type de roulement ou éléments roulants n'est pas limitatif dans le cadre de la présente invention.

De l'huile est injectée dans l'enceinte à huile 2 afin de lubrifier et de refroidir les éléments roulants 10 du palier. A cet effet, de l'huile circule dans un circuit de lubrification 7 intégré dans la bague de distribution 5 jusqu'à une surface cylindrique externe 5a de la bague de distribution 5 qui sert au montage de la bague interne 12.

L'huile est apportée par un gicleur d'huile 9 qui est ici situé à l'amont de la bague de distribution 5 (les expressions « amont » et « aval » font ici référence à l'écoulement général des gaz dans la turbomachine). La bague 5 a une forme générale annulaire autour de l'axe X et comprend à son extrémité amont une écope 11 de récupération de l'huile projetée par le gicleur 9. Cette écope se présente sous la forme d'un rebord cylindrique orienté vers l'amont dans l'exemple représenté. L'écope 11 s'étend autour et à distance de l'arbre 4 et définit avec celui-ci un espace annulaire de réception de l'huile du gicleur 9.

Le circuit d'huile 7 comprend au moins une entrée débouchant sur l'extrémité amont de la bague de distribution 5, dans l'espace précité de réception d'huile.

Dans l'exemple représenté, cette entrée est formée par une extrémité amont 7aa d'au moins un canal 7a qui a une forme allongée le long de l'axe X et qui comprend une extrémité aval 7ab située au niveau de l'extrémité aval de la bague de distribution 5.

Toujours à son extrémité amont, la bague 5 comprend une rangée annulaire de dents de crabot 13 qui sont orientées axialement vers l'amont et sont engagées entre des dents de crabot complémentaires de l'arbre 4. Cette coopération permet de solidariser en rotation la bague 5 sur l'arbre 4. Comme on le voit dans le dessin, l'extrémité 7aa est située radialement entre les dents de crabot 13 et l'écope 11.

Des conduits d'huile 15 orientés sensiblement radialement par rapport à l'axe X s'étendent depuis le canal 7a jusqu'à la surface 5a de la bague 5 en vue de la lubrification du palier 8.

La bague interne 12 du palier 8 comprend également un circuit intégré 12a d'huile en vue de la circulation de l'huile amenée par le circuit 7 de la bague 5, pour lubrifier les éléments roulants et leur cage. La bague interne 12 est en appui axial vers l'amont sur un épaulement annulaire 5b de la bague 5. En aval de la surface 5a de montage de la bague interne 12, la bague de distribution 5 comprend un filetage externe 5c de vissage d'un écrou 16 qui prend appui axialement sur l'extrémité aval de la bague 12 afin de la serrer axialement contre l'épaulement 5b.

L'enceinte à huile 2 comprend en outre un système d'étanchéité destiné à assurer une étanchéité de cette enceinte à huile par rapport à une enceinte à air 20 voisine qui doit être exempte d'huile.

A cet effet, le système d'étanchéité comprend notamment un joint annulaire dynamique 22. Typiquement, ce joint dynamique 22 est composé de segments d'anneau en carbone. Le joint dynamique 22 est maintenu dans un flasque annulaire 28 lui-même monté à l'intérieur du couvercle 6.

Le flasque 28 présente une partie 28a de section en forme de L qui reçoit le joint dynamique 22.

Le joint annulaire dynamique 22 est associé à une piste de joint 26, qui est tournante et portée par l'arbre 4. La piste 26 comporte une surface de contact 26a, en contact glissant avec le joint annulaire dynamique 22. La surface de contact 26a et la piste 26 sont traités pour améliorer le glissement joint/piste et minimiser l'usure du joint annulaire dynamique 22. Le système d'étanchéité comporte également un joint labyrinthe 23 disposé en aval du joint dynamique 22, entre un tourillon 21 monté sur l'arbre 4 et le couvercle 6.

Le tourillon 21 est solidarisé en rotation avec l'arbre 4 par l'intermédiaire de cannelures 21a. Le tourillon 21 est situé en aval de la bague de distribution 5 et comprend une extrémité amont en appui axial contre l'extrémité aval de la bague 5, cette extrémité aval formant une butée axiale. Un écrou 24 est vissé sur l'arbre 4, en aval du tourillon 21, afin de plaquer celui-ci axialement contre la bague 5 qui est elle-même maintenue serrée axialement contre les dents de crabot de l'arbre 4. Par ailleurs, la bague 5 est de préférence frettée sur l'arbre 4 pour garantir son centrage.

Selon une caractéristique de l'invention, la bague de distribution 5 et la piste 26 du joint dynamique 22 sont formées d'une seule pièce, par exemple par fabrication additive. La bague 5 et la piste 26 sont ainsi formées par un corps monobloc qui intègre le circuit 7.

Comme cela est visible dans les dessins, le circuit 7 s'étend axialement vers l'aval jusqu'à la piste 26 en vue du refroidissement par conduction de la surface 26a.

Le canal 7a précité a ainsi son extrémité aval 7ab qui est située au plus proche de l'extrémité aval de la piste 26 et du corps, et qui est entourée par la surface 26a. Dans l'exemple représenté, le canal 7 est rectiligne et situé sur une circonférence centrée sur l'axe X ayant un diamètre D1. La surface 26a est située sur une circonférence centrée sur cet axe X de diamètre D3. Le circuit 7 comprend au moins un autre canal 7b qui a une forme générale allongée et de préférence rectiligne et qui est situé sur une circonférence centrée sur l'axe X de diamètre D2. D1 est inférieur à D2 qui est inférieur à D3, ce qui signifie que le canal 7b s'étend entre le canal 7a et la surface 26a.

Le canal 7b a une extrémité aval 7ba reliée à l'extrémité aval 7ab du canal 7a et une extrémité amont 7bb qui débouche sur la surface 5a, ou dans le filetage 5c, ou entre la surface 5a et le filetage 5c, comme dans l'exemple représenté. Cette extrémité 7bb peut être coudée en L et comprendre une partie orientée radialement vers l'extérieur et débouchant par exemple dans une gorge annulaire 7c prévue sur la bague 5, qui débouche radialement vers l'extérieur.

La liaison des extrémités 7ab et 7ba peut être réalisée par au moins un conduit 7d coudé en C par exemple.

L'écrou 16 peut comprendre au moins un canal 29 intégré de circulation d'huile, qui est destiné à recevoir de l'huile provenant de la gorge 7c. Ce canal 29 est par exemple incliné de l'amont vers l'aval radialement vers l'extérieur et comprend une extrémité radialement interne débouchant en regard de la gorge 7c, et une extrémité radialement externe débouchant vers l'extérieur en vue de la projection d'huile vers l'extérieur. Ceci permet de conférer à l'écrou 16 une fonction de lance goutte par centrifugation, qui permet de projeter l'huile ayant servi à la lubrification du palier 8 et/ou au refroidissement du joint 22, à distance de ce joint. La présence d'huile sur le joint 22 risquerait en effet de réduire son efficacité.

L'intégration du circuit de refroidissement à la piste de joint 26 permet d'en réduire le diamètre, ce qui a un double avantage. Tout d'abord, cela diminue l'encombrement radial dans cette zone. Par ailleurs, les frottements du joint 22 sur la piste 26 sont moins importants de part des vitesses périphériques plus faibles. Enfin, la section de passage entre le joint 22 et la piste 26 est plus faible et donc les fuites y sont aussi plus faibles.

La figure 1 représente de manière schématique par des flèches le cheminement de l'huile en fonctionnement. L'huile est projetée par le gicleur 9 dans l'espace délimité par l'écope 11 et pénètre dans le circuit 7. De l'huile est acheminée jusqu'au palier 8 en vue de sa lubrification, et jusqu'au voisinage de la surface 26a en vue de son refroidissement par conduction. L'huile de lubrification est centrifugée naturellement par le palier 8, et l'huile de refroidissement de la piste 26 est acheminée jusqu'à la gorge 7c où elle est ensuite évacuée à travers le canal 29 de l'écrou 16.

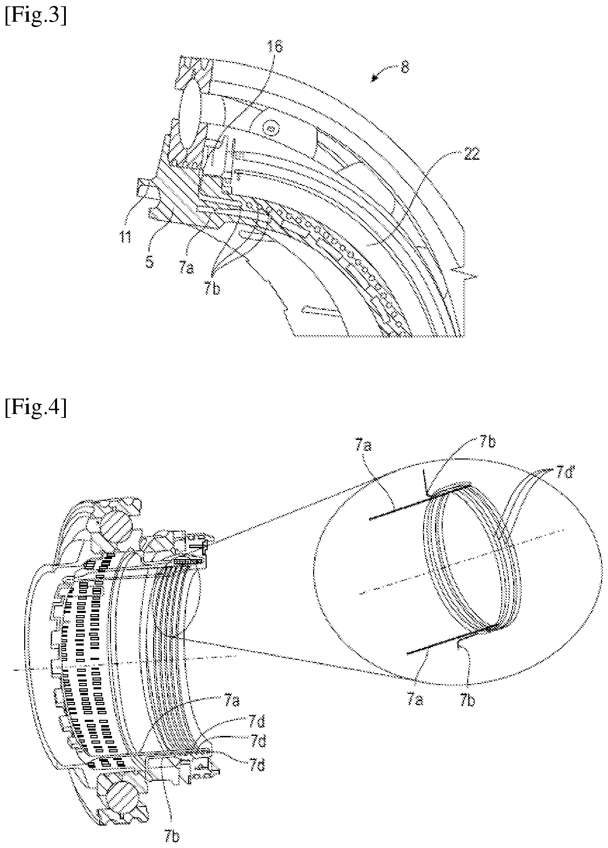

Les figures 2 et 3 permettent de constater que le circuit 7 peut comprendre plusieurs canaux 7a, 7b régulièrement espacés autour de l'axe X. Le corps peut comprendre jusqu'à dix canaux 7a voire plus. Ces canaux 7a peuvent en section avoir une forme circulaire. Leur section peut par ailleurs changer le long de l'axe X. Ils peuvent avoir chacun une section circulaire sur une portion amont et une section rectangulaire sur une portion aval.

Le corps peut également comprendre jusqu'à dix canaux 7b voire plus. Ces canaux 7b peuvent en section avoir une forme circulaire. Leur section peut par ailleurs changer le long de l'axe X. Ils peuvent avoir chacun une section circulaire sur une portion amont et une section rectangulaire sur une portion aval.

Les canaux 7a, 7b s'étendent ici parallèlement à l'axe X bien que ceci ne soit pas limitatif.

Les figures 4 à 7 sont des vues similaires à celle de la figure 2 et illustrent des variantes de réalisation de l'invention et en particulier du circuit 7.

Dans la variante de la figure 4, le circuit 7 comprend deux canaux 7a et deux canaux 7b. Chacun des canaux 7a est relié à un des canaux 7b par un conduit 7d' en forme de spirale ou hélice s'étendent autour de l'axe X. La vue de détail de la figure 4 permet de voir que les conduits 7d' de même diamètre sont imbriqués l'un dans l'autre.

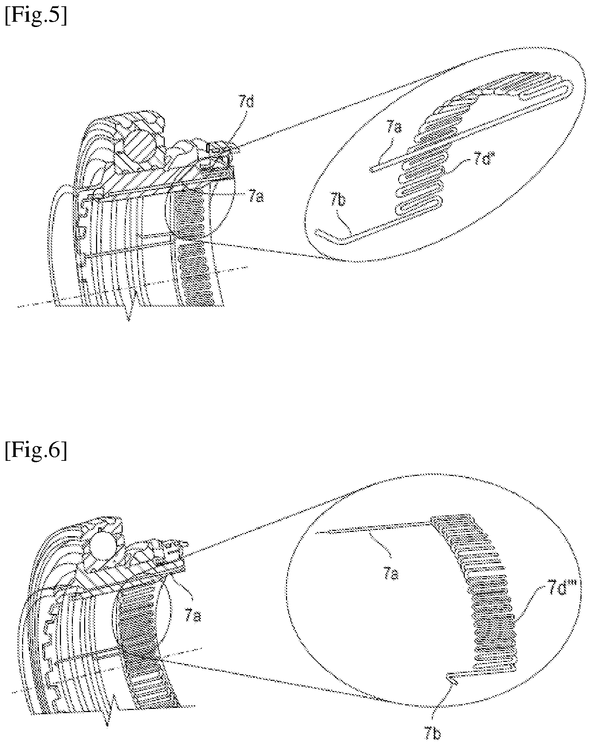

Dans la variante de la figure 5, le circuit 7 comprend des canaux 7a qui sont chacun reliés à un canal 7b par un conduit 7d" en zig-zag. Ce conduit 7d" occupe un secteur angulaire autour de l'axe X (vue de détail de la figure 5). L'étendue angulaire du conduit 7d" ou de ce secteur dépend du nombre de canaux 7a et 7b et est par exemple compris entre 30 et 60°. Dans la variante de la figure 6, le circuit 7 comprend des canaux 7a qui sont chacun reliés à un canal 7b par un conduit 7d‴ vrillé. Ce conduit 7d‴ occupe un secteur angulaire autour de l'axe X (vue de détail de la figure 6). L'étendue angulaire du conduit 7d'" ou de ce secteur dépend du nombre de canaux 7a et 7b et est par exemple compris entre 30 et 60°.

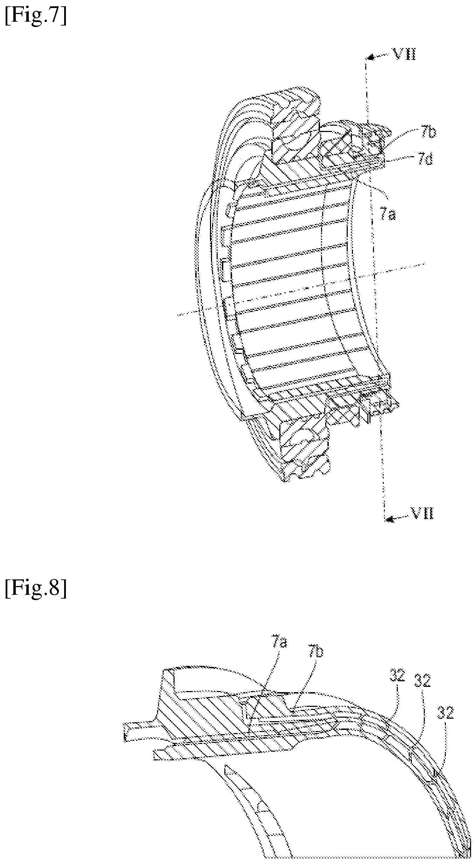

Dans la variante des figures 7 et 8, le circuit 7 comprend des canaux 7a, 7b qui ont en section une forme générale trapézoïdale et qui sont séparés les uns des autres par des cloisons 32 inclinées.

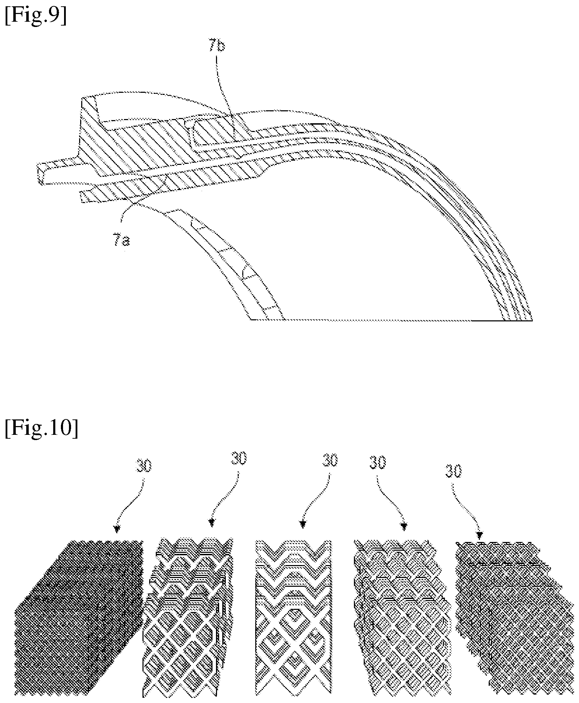

Enfin, dans la variante de réalisation de la figure 9, le circuit 7 comprend un seul canal 7a qui a une forme générale annulaire et est ininterrompu autour de l'axe X, et un seul canal 7b qui a une forme générale annulaire et est ininterrompu autour de l'axe X. Bien que non visible, le conduit de liaison de ces canaux 7a, 7b, par exemple à section coudée, peut également être annulaire et ininterrompu.

Les canaux 7a, 7b et conduits de la figure 9 sont au moins partiellement remplis avec une structure alvéolaire 30 formant un treillis. La figure 10 montre quelques exemples d'une telle structure 30. Cette structure 30 peut être formée par une répétition et organisation tridimensionnelle de motifs géométriques prédéfinis. La structure 30 permet de raidir le corps, d'augmenter les échanges thermiques avec l'huile mais aussi de diminuer la masse de ce corps.

Dans un exemple particulier de réalisation de l'invention, les longueurs cumulées des canaux et conduits du circuit 7 peuvent être comprises entre 2000 et 6000mm. Les canaux et conduits peuvent avoir un diamètre ou diamètre équivalent compris entre 1 et 5mm.

Le dispositif de distribution d'huile selon l'invention comprend le corps monobloc qui intègre donc les fonctions de la bague de distribution et de la piste de joint de la technique antérieure. La bague peut elle-même être considérée comme ayant plusieurs fonctions d'écopage de l'huile en sortie du gicleur, et de support et mise en position de ce palier. Le circuit d'huile intégré au corps a également deux fonctions de lubrification du palier et de refroidissement de la piste de joint.

La fabrication additive est une méthode particulièrement adaptée pour réaliser ce corps. Elle permet notamment de réaliser la structure 30 de la figure 10 d'une seule pièce avec le reste du corps.

Les avantages majeurs de l'invention sont notamment le compactage du dispositif, la suppression de pièces, l'augmentation de l'efficacité du joint dynamique, et la diminution de la masse embarquée.

## Revendications

1. Dispositif de distribution d'huile d'un palier à roulement (8) pour une turbomachine d'aéronef, comportant :
- un palier à roulement (8) comportant deux bagues (12, 14), respectivement interne et externe,
- une bague (5) de distribution d'huile configurée pour être montée sur un arbre (4) de turbomachine, cette bague de distribution comportant :
i) une première surface cylindrique externe (5a) de montage de la bague interne (12) du palier, et
ii) une écope (11) de récupération d'huile alimentant un circuit (7) de lubrification dudit palier,
- une piste annulaire (26) d'un joint dynamique (22),
**caractérisé en ce que** ladite bague de distribution (5) et ladite piste (26) sont formées par un corps d'une seule pièce, et **en ce que** ledit circuit de lubrification (7) est formé dans ce corps et s'étend dans la bague de distribution et la piste.

2. Dispositif selon la revendication 1, dans lequel ledit corps comporte une seconde surface cylindrique externe (26a) de support du joint (22), et dans lequel ledit circuit (7) comprend au moins un premier canal (7a) de forme allongée comportant une première extrémité axiale (7aa) débouchant au niveau de ladite écope (11), et une seconde extrémité axiale (7ab) opposée entourée par ladite seconde surface (26a).

3. Dispositif selon la revendication 2, dans lequel ledit circuit (7) comprend au moins un second canal (7b) de forme allongée comportant une troisième extrémité axiale (7ba) reliée à la seconde extrémité axiale (7ab) dudit au moins un premier canal (7a), et une quatrième extrémité axiale (7bb) opposée débouchant au niveau ou au voisinage de ladite première surface (5a).

4. Dispositif selon la revendication 3, dans lequel ledit au moins un premier canal (7a) est situé sur une circonférence centrée sur un axe (X) du palier (8), qui a un diamètre D1, et ledit au moins un second canal (7b) est situé sur une circonférence centrée sur cet axe, qui a un diamètre D2, avec D1 inférieur à D2 qui est lui-même inférieur au diamètre D3 de ladite seconde surface (26a).

5. Dispositif selon la revendication 3 ou 4, dans lequel les seconde et troisième extrémités (7ab, 7ba) sont reliées entre elles par au moins un conduit (7d) coudé, et/ou au moins un conduit (7d") en zig-zag, et/ou au moins un conduit (7d') en spirale ou hélice.

6. Dispositif selon l'une des revendications 3 à 5, dans lequel ledit au moins un premier canal (7a) et/ou ledit au moins un second canal (7b) est/sont au moins en partie rempli(s) d'une structure alvéolaire (30) formant treillis.

7. Dispositif selon l'une des revendications 3 à 6, dans lequel ledit au moins un premier canal (7a) et/ou ledit au moins un second canal (7b) a/ont en section transversale une forme générale circulaire, triangulaire, rectangulaire ou trapézoïdale.

8. Dispositif selon l'une des revendications précédentes, dans lequel ledit corps comprend un épaulement annulaire (5b) d'appui d'une première extrémité axiale de la bague interne (12), ledit corps comportant en outre un filetage (5c) de vissage d'un écrou (16) configuré pour prendre appui sur une seconde extrémité axiale opposée de la bague interne.

9. Dispositif selon la revendication 8 en dépendance de l'une des revendications 3 à 7, dans lequel ledit au moins un second canal (7b) a sa quatrième extrémité (7bb) qui débouche entre ladite première surface (5a) et ledit filetage (5c), de préférence en regard d'au moins un troisième canal (29) formé dans ledit écrou (16).

10. Turbomachine, en particulier d'aéronef, comportant au moins un dispositif selon l'une des revendications précédentes.

## Patentansprüche

1. Ölverteilungsvorrichtung eines Wälzlagers (8) für eine Luftfahrzeugturbomaschine, umfassend:
- ein Wälzlager (8), das zwei Ringe (12, 14), einen inneren bzw. einen äußeren, umfasst,
- einen Ölverteilungsring (5), der konfiguriert ist, um auf eine Turbomaschinenwelle (4) montiert zu sein, wobei dieser Verteilungsring Folgendes umfasst:
i) eine erste äußere zylindrische Oberfläche (5a) zur Montage des Innenrings (12) des Lagers, und
(ii) einen Schacht (11) zur Ölrückgewinnung, der einen Schmierkreislauf (7) des Lagers versorgt,
- eine ringförmige Laufbahn (26) einer dynamischen Dichtung (22),
**dadurch gekennzeichnet, dass** der Verteilungsring (5) und die Laufbahn (26) aus einem einstückigen Körper gebildet sind, und dass der Schmierkreislauf (7) in diesem Körper gebildet ist und sich in dem Verteilungsring und der Laufbahn erstreckt.

2. Vorrichtung nach Anspruch 1, wobei der Körper eine zweite äußere zylindrische Oberfläche (26a) zum Tragen der Dichtung (22) umfasst, und wobei der Kreislauf (7) mindestens einen ersten Kanal (7a) in länglicher Form umfasst, der ein erstes axiales Ende (7aa) umfasst, das auf dem Niveau des Schachts (11) mündet, und ein entgegengesetztes zweites axiales Ende (7ab), das von der zweiten Oberfläche (26a) umgeben ist.

3. Vorrichtung nach Anspruch 2, wobei der Kreislauf (7) mindestens einen zweiten Kanal (7b) mit länglicher Form umfasst, der ein drittes axiales Ende (7ba) umfasst, das mit dem zweiten axialen Ende (7ab) des mindestens einen ersten Kanals (7a) verbunden ist, und ein entgegengesetztes viertes axiales Ende (7bb), das auf dem Niveau oder in der Nähe der ersten Oberfläche (5a) mündet.

4. Vorrichtung nach Anspruch 3, wobei der mindestens eine erste Kanal (7a) auf eigenem Umfang liegt, der auf einer Achse (X) des Lagers (8) zentriert ist, der einen Durchmesser D1 aufweist, und wobei der mindestens eine zweite Kanal (7b) auf einem Umfang liegt, der auf dieser Achse zentriert ist, der einen Durchmesser D2 aufweist, wobei D1 kleiner ist als D2, der selbst kleiner ist als der Durchmesser D3 der zweiten Oberfläche (26a).

5. Vorrichtung nach Anspruch 3 oder 4, wobei das zweite und das dritte Ende (7ab, 7ba) miteinander durch mindestens eine abgewinkelte Leitung (7d) verbunden sind, und/oder mindestens eine Zick-Zack-Leitung (7d"), und/oder durch mindestens eine spiral- oder schraubenförmige Leitung (7d').

6. Vorrichtung nach einem der Ansprüche 3 bis 5, wobei der mindestens eine erste Kanal (7a) und/oder der mindestens eine zweite Kanal (7b) mindestens zum Teil mit einer Zellstruktur (30), die ein Gitter bildet, gefüllt ist (sind).

7. Vorrichtung nach einem der Ansprüche 3 bis 6, wobei der mindestens eine erste Kanal (7a) und/oder der mindestens eine zweite Kanal (7) im Querschnitt eine allgemeine kreisförmige, dreieckige, rechteckige oder Trapezform aufweist.

8. Vorrichtung nach einem der vorstehenden Ansprüche, wobei der Körper einen ringförmigen Ansatz (5b) zur Auflage eines ersten axialen Endes des Innenrings (12) umfasst, wobei der Körper außerdem ein Gewinde (5c) zum Schrauben einer Mutter (16) umfasst, die konfiguriert ist, um auf einem entgegengesetzten zweiten axialen Ende des Innenrings aufzuliegen.

9. Vorrichtung nach Anspruch 8, abhängig von einem der Ansprüche 3 bis 7, wobei der mindestens eine zweite Kanal (7b) sein viertes Ende (7bb) hat, das sich zwischen der ersten Oberfläche (5a) und dem Gewinde (5c) öffnet, bevorzugt mindestens einem dritten Kanal (29) zugewandt, der in der Mutter (16) ausgebildet ist.

10. Turbomaschine, insbesondere eines Luftfahrzeugs, die mindestens eine Vorrichtung nach einem der vorstehenden Ansprüche umfasst.

## Claims

1. A device for distributing oil from a rolling bearing (8) for an aircraft turbine engine, comprising:
- a rolling bearing (8) comprising two rings (12, 14), respectively inner and outer,
- an oil distribution ring (5) configured to be mounted on a turbine engine shaft (4), this distribution ring comprising:
i) a first outer cylindrical surface (5a) for mounting the inner ring (12) of the bearing, and
ii) an oil recovery scoop (11) supplying a circuit (7) configured for lubricating said bearing,
- an annular track (26) of a dynamic seal (22),
**characterised in that** said distribution ring (5) and said track (26) are formed by a single-part body, and **in that** said lubricating circuit (7) is formed in this body and extends into the distribution ring and the track.

2. The device according to claim 1, wherein said body comprises a second outer cylindrical surface (26a) for supporting the seal (22), and wherein said circuit (7) comprises at least one first channel (7a) of elongated shape comprising a first axial end (7aa) opening at the level of said scoop (11), and a second opposite axial end (7ab) surrounded by said second surface (26a).

3. The device according to claim 2, wherein said circuit (7) comprises at least one second elongated channel (7b) comprising a third axial end (7ba) connected to the second axial end (7ab) of said at least one first channel (7a), and an opposite fourth axial end (7bb) opening at the level of or at the vicinity of said first surface (5a).

4. The device according to claim 3, wherein said at least one first channel (7a) is located on a circumference centred on an axis (X) of the bearing (8), which has a diameter D1, and said at least one second channel (7b) is located on a circumference centred on this axis, which has a diameter D2, with D1 being less than D2 which is itself less than the diameter D3 of said second surface (26a).

5. The device according to claim 3 or 4, wherein the second and third ends (7ab, 7ba) are connected to each other by at least one bent conduit (7d), and/or at least one zig-zag conduit (7d'), and/or at least one spiral or helical conduit (7d').

6. The device according to any of claims 3 to 5, wherein said at least one first channel (7a) and/or said at least one second channel (7b) is/are at least partly filled with a honeycomb structure (30) forming a lattice.

7. The device according to any of claims 3 to 6, wherein said at least one first channel (7a) and/or said at least one second channel (7b) has/have a generally circular, triangular, rectangular or trapezoidal cross-sectional shape.

8. The device according to one of the preceding claims, wherein said body comprises an annular shoulder (5b) for bearing a first axial end of the inner ring (12), said body further comprising a thread (5c) for screwing a nut (16) configured to bear on a second opposite axial end of the inner ring.

9. The device according to claim 8 in dependence on one of claims 3 to 7, wherein said at least one second channel (7b) has its fourth end (7bb) opening between said first surface (5a) and said thread (5c), preferably facing at least one third channel (29) formed in said nut (16).

10. A turbine engine, in particular for aircraft, comprising at least one device according to one of the preceding claims.
